# EUROPÄISCHE PATENTSCHRIFT

(11) **EP 2 931 415 B1**
(45) Veröffentlichungstag und Bekanntmachung des Hinweises auf die Patenterteilung: **18.11.2020**
(21) Anmeldenummer: 13814068.6
(22) Anmeldetag: 12.12.2013
(51) Int. Cl.: B01J 19/00, B01J 8/00

(54) **VERFAHREN ZUR DURCHFÜHRUNG WÄRMEVERBRAUCHENDER PROZESSE**
METHOD FOR PERFORMING HEAT CONSUMING PROCESSES
PROCÉDÉ DESTINÉ À RÉALISER DES PROCESSUS ENDOTHERMIQUES

(30) Priorität: 13.12.2012 DE 102012024387; 18.12.2012 EP 12197739
(43) Veröffentlichungstag der Anmeldung: 21.10.2015
(73) Patentinhaber: BASF SE, 67056 Ludwigshafen am Rhein (DE); Linde GmbH, 82049 Pullach (DE)
(72) Erfinder: MACHHAMMER, Otto, 68163 Mannheim (DE); HORMUTH, Wolfgang Alois, 67487 St Martin (DE); SCHNEIDER, Christian, 68161 Mannheim (DE); BODE, Andreas, 68163 Mannheim (DE); GOEKE, Volker, 82538 Geretsried (DE); MAASS, Hans-Juergen, 01328 Dresden (DE); KERN, Matthias, 76135 Karlsruhe (DE); KLINGLER, Dirk, 68163 Mannheim (DE); KÖNIG, Rene, 67067 Ludwigshafen (DE); BRÜGGEMANN, Philipp, 91054 Erlangen (DE); BERNNAT, Jens, 67269 Grünstadt (DE); KOLIOS, Grigorios, 67435 Neustadt (DE)
(74) Vertreter: BASF IP Association
(86) Internationale Anmeldenummer: PCT/EP2013/076302
(87) Internationale Veröffentlichungsnummer: WO 2014/090914

(56) Entgegenhaltungen:
- DE-B- 1 266 273
- US-A- 4 668 494
- US-A- 4 776 171
- US-A1- 2008 303 348
- US-A1- 2011 081 586

## Beschreibung

Die Erfindung betrifft ein Verfahren zur Durchführung wärmeverbrauchender Prozesse, bei denen elektrische Energie mit zeitlich schwankender Leistung effektiv genutzt wird.

Der Anteil erneuerbarer Energien an der Stromerzeugung, der im Jahr 2011 in Deutschland bereits bei 20% lag, wird sich in den nächsten Jahren noch deutlich erhöhen, da aufgrund steigender Kosten für fossile Energieträger einerseits und wegen marktregulatorischer Maßnahmen andererseits die Technologien zur Stromerzeugung auf Basis erneuerbarer Energien betriebswirtschaftlich attraktiv sind und es bleiben werden. Hierzu wird auch die mit der technischen Weiterentwicklung einhergehende Reduktion der spezifischen Investitionskosten beitragen. Ein Problem dabei ist, dass Sonne, Wind und Wasser zeitlich nicht konstant verfügbar sind und ihre Verfügbarkeit darüber hinaus nur schlecht vorhersagbar ist.

Das Problem der Speicherung und somit Nutzbarmachung der erneuerbaren Energie wird bereits seit den achtziger Jahren thematisiert. Um den Energieabnehmern, z.B. der chemischen Industrie, trotz Verwendung von erneuerbaren Energien einen Strom mit konstanter Leistung anbieten zu können, wurde u.a. folgendes von den Energieanbietern in Erwägung gezogen:
US 4,776,171 beschreibt ein Energieerzeugungs- und Management System bestehend aus mehreren erneuerbaren Energiequellen und mehreren Energiespeicherquellen, sowie mehreren Kontroll- und Verteilungsstationen, um dem Bedarf der Industrie gerecht zu werden. In US 4,776,171 wird keine konventionelle Energiequelle eingesetzt und folglich keine Kombination einer elektrischen mit einer nicht-elektrischen Energiequelle beschrieben.
In US 2011/0081586 wird ebenso eine Kombination einer erneuerbaren Energiequelle mit einer elektrochemischen oder elektrolytischen Zelle beschrieben, in der die elektrochemische oder elektrolytische Zelle die Schwankungen der erneuerbaren Energiequelle ausgleichen kann und diese somit kontinuierlich nutzbar macht. Eine Kombination einer elektrischen mit einer nicht-elektrischen Energiequelle wird demnach nicht offenbart.
US 2008/0303348 offenbart ein Kraftwerk, das ausschließlich auf erneuerbaren Energien beruht und dennoch eine bedarfsabhängige Steuerung ermöglicht. US 2008/0303348 beschreibt die Kombination von Windenergie, Sonnenenergie und der Energie, die aus der Verbrennung von Biomasse gewonnen wird. Es wird beschrieben, dass das Kraftwerk reibungslos und spontan zwischen den drei Energiequellen wechseln kann, um zu jeder Zeit den entsprechenden Bedarf kostengünstig zu decken. Fraglich ist jedoch, ob ausschließlich erneuerbare Energien den Bedarf z.B. eines chemischen Hochtemperaturprozesses ganzjährlich decken könnten.

Ferner gab es Überlegungen, Solarenergie direkt in chemischen Prozessen zu nutzen ohne die Schwankungen der Solarenergie vorher in einem Kraftwerk zu glätten. US 4,668,494 beschreibt ein Verfahren unter Nutzung von Sonnenenergie zur Herstellung von Ammoniak durch DampfReformierung von Kohlenwasserstoffen oder Vergasung von kohlenstoffhaltigen Brennstoffen und Umsetzen der Produkte mit einem Ammoniak-Synthesegas, sowie Umwandeln des Ammoniak-Synthesegases zu Ammoniak. Die erforderlichen Wärme für die Dampfreformierung von Kohlenwasserstoffen oder der Vergasung von kohlenstoffhaltigen Brennstoffen wird durch ein Wärmeübertragungsfluid bereitgestellt, dieses wird zum einen durch die Solarenergie, wenn Solarenergie vorhanden ist, und zum anderen - in Abhängigkeit von der Stärke der Solarenergie - durch Verbrennen eines Teils des Ammoniaks erhitzt, um die erforderliche Wärme in Summe zu liefern. Es wird beschrieben, dass zur Mittagszeit, wenn der Eintrag der Solarenergie am größten ist, der Ammoniakverbrenner mit der kleinstmöglichsten Feuerungsrate betrieben wird. Es wird ferner beschrieben, dass zwar theoretisch die Sonnenenergie den kompletten Energiebedarf der Ammoniaksynthese decken könnte, aber ein Abschalten und wieder Anfahren des Ammoniakverbrenners komplett unpraktisch wäre.

Der Vorteil des in US 4,668,494 beschriebenen Verfahrens im Vergleich zum Stand der Technik ist das Einsparen eines - die Schwankungen der Sonnenenergie ausgleichenden - Kraftwerks. Ferner ist die Entkopplung der Reaktionskammer von den Wärmequellen vorteilhaft. Desweiteren ist die flexible Einkopplung verschiedener Wärmequellen und die einfache Regelbarkeit des Gesamtverfahrens vorteilhaft. Nachteilig ist neben der erwähnten Unmöglichkeit, den Ammoniakverbrenner in einer akzeptablen Zeit runter und wieder hoch zu fahren, die Verwendung eines Wärmeübertragungsfluid, das damit verbundene aufwendige Handling und die Einbuße durch die Wärmetransportwiderstände, die sich insbesondere im Hochtemperaturbereich auswirken. Ferner ist an dem in US 4,668,494 beschriebenen Prozess nachteilig, dass zu Zeiten ohne Sonneneinstrahlung das Ziel-Produkt Ammoniak verbrannt werden muss, um den Gesamtprozess am Laufen zu halten. Beispielsweise würde der Reformer in einem Verfahren nach US 4,668,494 in Mannheim, die 8-sonnigste Stadt in Deutschland, zu ca. 18 % solar geheizt; dies entspricht einer benötigten Ammoniakverbrennung von ca. 35 % des erzeugten Ammoniaks.

In naher Zukunft wird es demnach immer häufiger durch das Einspeisen der anteilig steigenden erneuerbaren Energien aus Sonne, Wind und Wasser in das Stromnetz vermehrt zu Stromspitzen kommen, die nur unvollständig von den Stromverbrauchern abgenommen werden können und daher als sog. Überschussstrom auf dem Strommarkt deutlich unterhalb seiner Gestehungskosten oder zu Preisen, die bezogen auf seinen Energiegehalt niedriger sind als für einen fossilen Brennstoff mit demselben Brennwert, oder umsonst (d.h. ohne Gegenleistung) oder sogar zu negativen Preisen angeboten werden.

Um zu verhindern, dass es zu Spannungs- und Frequenzschwankungen oder sogar zu einem Ausfall des Stromnetzes kommt, ist es notwendig, dass die in das Netz eingespeiste Strommenge immer dem aktuellen Verbrauch entspricht, da ansonsten an das Netz angeschlossene elektrische Verbraucher geschädigt werden können. Gegenwärtig werden kurzzeitige Stromschwankungen mit Hilfe sog. Spitzenlastkraftwerken im Rahmen einer Systemdienstleistung für die Netzbetreiber kompensiert.

Geeignete Spitzenlastkraftwerke sind beispielsweise Pump- oder Druckluftspeicherkraftwerke. Diese sind schnell regelbar und können innerhalb von Minuten zwischen Stromerzeugung und Stromverbrauch wechseln, um die im Überschuss vorhandene elektrische Energie in eine andere Energieform umzuwandeln. Im Fall eines Pumpspeicherkraftwerks wird dazu Wasser von einem tieferen Niveau in ein höheres gepumpt, im Fall des Druckluftspeichers wird mit Hilfe von Verdichtern der Druck eines Luftspeichers erhöht. Diese Energie steht abzüglich der Umwandlungsverluste in Zeiten wieder zur Stromproduktion zur Verfügung, in denen der Strombedarf die aktuelle Stromproduktion aus Grund- und Mittellast übersteigt. Druckluftspeicher haben den Vorteil, dass sie über längere Zeit Strom aufnehmen können und innerhalb kürzester Zeit das Vielfache ihrer Aufnahmeleistung wieder ans Netz abgeben können. Beispielsweise kann eine Stromaufnahme während der Nachtstunden des Wochenendes erfolgen und die Abgabe dieser Energie binnen 1-2 Stunden mit dem Vielfachen der Aufnahmeleistung zur werktäglichen Abendspitze. Kraftwerke dieser Art stehen jedoch nur in begrenzter Anzahl und mit begrenzter Kapazität zur Verfügung, da die hierfür notwendigen geografischen bzw. geologischen Voraussetzungen und behördliche Genehmigungen nur an wenigen Orten gegeben sind. Ferner weisen die Druckluftspeicherkraftwerke mit ca. 40 bis 50% einen relativ geringen Wirkungsgrad auf.

In Deutschland wird durch das Erneuerbare-Energien-Gesetz den Produzenten erneuerbarer Energien die vorrangige Einspeisung in das Stromnetz garantiert. So kann z. B. ein kurzeitig hohes Windaufkommen zu einem Überangebot an Strom führen, wenn alle schnell verfügbaren Strom-Speichermöglichkeiten bereits voll ausgelastet sind und die Lastminderung von Mittellastkraftwerken zu träge erfolgt. In diesem Fall wird der überschüssige Strom zu sehr niedrigen, zum Teil sogar negativen Preisen auf dem Strommarkt angeboten. Dies bedeutet, dass der Verkäufer den Käufer u.U. für die Abnahme des Stroms bezahlt. Der Jahrestiefpreis auf dem Intraday-Markt der europäischen Energiebörse EEX lag dabei im Jahr 2012 bei etwa - 200€/MWh. Im Gegensatz dazu können z.B. bei Ausfall eines großen Kraftwerks auch sehr hohe Preise auftreten. So lag 2012 der Höchstpreis auf dem EEX-Spotmarkt bei ca. 550€/MWh.

Kommt es trotz aller Netzoptimierungs- und Netzausbaumaßnahmen zu Situationen, in denen ein Herunterregeln der erneuerbaren Elektrizitätserzeuger aufgrund von Überkapazitäten bzw. fehlender Transportkapazitäten nicht vermeidbar ist, so muss dies vom Netzbetreiber, in dessen Netz die Ursache für das Herunterregeln begründet ist, vergütet werden. Im Jahr 2010 waren 127 GWh von diesen sog. Einspeisemanagementmaßnahmen betroffen, die mit etwa 10 Mio. € vergütet werden mussten (Monitoringbericht 2011 der Bundesnetzagentur).

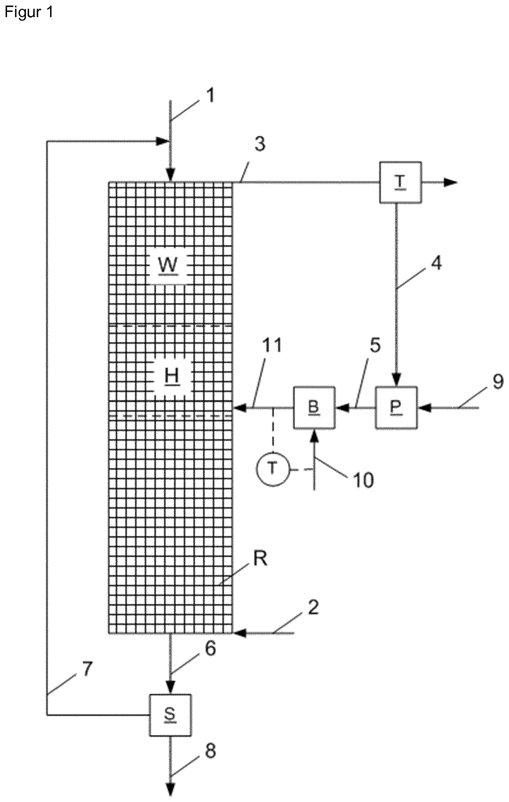

Bei der Frequenzregelung in elektrischen Netzen werden unterschiedlich schnelle Regelkreise eingesetzt: Die Primärregelung mit einer Ansprechzeit von weniger als 30s, die Sekundärregelung mit einer Ansprechzeit von weniger als 7,5min und schließlich die Tertiärregelung, die eine längere Ansprechzeit zulässt. Die Primär- und Sekundärregelung werden automatisch ausgelöst und wirken direkt auf den Betriebszustand laufender Kraftwerke. Die Tertiärregelung (oder Minutenreserve) wird in der Regel durch organisatorische Maßnahmen aktiviert. Die Minutenreserve kann positiv (bei erhöhtem Leistungsbedarf) oder negativ (bei reduziertem Leistungsbedarf) sein. Die positive Minutenreserve wird üblicherweise durch Zuschalten von Reservekraftwerken aktiviert. Die negative Minutenreserve erfordert einen Energieverbraucher. Nach dem aktuellen Stand der Technik werden dafür neben Pumpspeicherkraftwerken auch Kapazitätsänderungen von Großkraftwerken und Kraft-Wärme-Kopplungs-Anlagen sowie Endverbraucher, wie z.B. Lichtbogenöfen oder Kühlhäuser, genutzt. Jedoch ist deren Kapazität regional ungleichmäßig verteilt (s. IDOS-Bericht). Außerdem ist absehbar, dass der Bedarf an negativer Minutenreserve durch den Ausbau der regenerativen Energiequellen zunehmen wird. Im Jahr 2010 betrug die von den vier deutschen Netzbetreibern abgerufene negative Minutenreserve insgesamt ca. 850GWh (s. IDOS-Bericht, Abbildung 1). Dies entspricht etwa dem durchschnittlichen Jahresstromverbrauch einer Stadt mit 200.000 Einwohnern.

Durch die ausreichende Verfügbarkeit von schnell be- und entladbaren Energiespeichern könnte die oben beschriebene Problematik behoben werden. Allerdings konnte sich von den derzeit untersuchten Speichertechnologien, wie z.B. Batterien, Schwungräder, Kondensatoren, Hochtemperaturspeicher, bisher keine am Markt etablieren, da zum einen die spezifischen Investitionskosten zu hoch und zum anderen technische Probleme wie z.B. die Selbstentladung oder eine zu geringe Kapazität nicht gelöst sind.

Eine weitere derzeit viel diskutierte Technologie zur Nutzung und/oder Speicherung von Überschussstrom basiert auf der Elektrolyse von Wasser zur Produktion von Wasserstoff, der anschließend gespeichert und zeitversetzt rückverstromt oder chemisch weiterverarbeitet werden kann. Beispielsweise wird momentan intensiv daran geforscht, den durch Elektrolyse gewonnenen Wasserstoff mit Kohlendioxid zu synthetischem Erdgas umzusetzen. Die bereits beschriebenen Schwankungen in der Verfügbarkeit des Überschussstroms bedingen jedoch eine transiente Betriebsweise der Elektrolyse und damit einen entsprechend stark schwankenden Produktstrom.

Elektrischer Strom wird derzeit als Energiequelle der Wahl hauptsächlich für nicht katalysierte Gas/Feststoff- und für Feststoffreaktionen eingesetzt, wenn große Wärmeströme auf sehr hohem Temperaturniveau eingetragen werden müssen. Typische Anwendungen sind metallurgische Öfen [Ullmann: Metalurgical Furnaces]. Als einzige relevante Gasphasenprozesse haben sich das Plasmaverfahren zur Herstellung von Acetylen aus Methan [Baumann, Angewandte Chemie, Ausgabe B, Band 20 (1948), Seiten 257-259,1948] und das Verfahren zur Herstellung von Reduziergasen in der Stahlindustrie großtechnisch etabliert. In der Literatur finden sich zwar weitere Hinweise auf den Einsatz von elektrischen Energiequellen in Gasphasenprozessen, aus denen jedoch bislang keine wirtschaftlich in industriellem Maßstab einsetzbaren Anwendungen entwickelt werden konnten.

Verfahren mit elektrischer Beheizung werden für die Herstellung von Blausäure (HCN) aus Alkanen, insbesondere aus Methan und Ammoniak, beschrieben. In der Patentschrift US 2,958,584 wird die Herstellung von HCN aus Propan und Ammoniak in einer elektrisch beheizten Wirbelschicht aus Kohlenstoffpartikeln offenbart, während US 6,096,173 die Herstellung von Blausäure als Gasphasenreaktion von Methan und Ammoniak unter Verwendung einer KoronaEntladung beschreibt.

Die Patentanmeldung DE 1 266 273 offenbart die Zerlegung eines Kohlenwasserstoffs in Wasserstoff und Koks, wobei der Koks eine hohe Reinheit und Festigkeit aufweist. Die Beheizung der Reaktionszone wird elektrisch resistiv durchgeführt, indem das Kohlenstoffbett, das als Wanderbett oder Wirbelbett beschrieben ist, als Widerstand genutzt wird. Ferner wird eine Wärmeintegration durch Gegenstromführung von Feststoff- und Gasstrom beschrieben.

Ferner wurden der Einsatz eines Plasmagenerators für die Herstellung von Synthesegas untersucht (37 L. Kerker, R. Müller: "Das Plasmareforming-Verfahren zur Erzeugung von Reduktionsgasen," Stahl Eisen 104, (1984) no. 22, 1137) sowie die Nutzung elektrischer bzw. elektromagnetischer Verfahren zur Zersetzung von Kohlenwasserstoffen beschrieben (Häussinger, P., Lohmüller, R. and Watson, A. M. 2000. Hydrogen, 2. Production. Ullmann's Encyclopedia of Industrial Chemistry). So kann Wärme durch elektrischen Strom induktiv (DE 2 420 579) oder resistiv erzeugt und auf die Kohlenwasserstoffe übertragen werden (DE 1 266 273). Besonders wirkungsvoll sind Plasma-Verfahren wie beispielsweise das in der Patentanmeldung WO 93/12030 offenbarte, bei denen ein Gas in einem Lichtbogen durch Ionisierung seiner Atome bzw. Moleküle in ein Plasma überführt wird. Die bei der Rekombination von Elektronen und lonen erzeugte Wärme liefert die für die Zersetzung der Kohlenwasserstoffe notwendige Energie.

Bei einigen wichtigen wärmeverbrauchenden Prozessen handelt es sich um Hochtemperaturprozesse, d.h. Prozesse, die bei Temperaturen zwischen 500 und 2.500°C ausgeführt werden. Als Vertreter dieser sehr energie-intensiven Verfahren seien die Dampf- und die TrockenReformierung, Dehydrierungen, beispielsweise von primären Alkoholen zu Aldehyden, von sekundären Alkoholen zu Ketonen, von Alkanen zu Alkenen und von Cycloalkanen zu Cycloalkenen, die Herstellung von Blausäure aus Methan und Ammoniak, die Herstellung von Stickstoffmonoxid, das Cracken bzw. die Pyrolyse von Kohlenwasserstoffen und die Thermolyse von Wasser genannt. Die Dampf- und die Trockenreformierung sind Verfahren zur Herstellung von Synthesegas, einer Mischung von Kohlenstoffmonoxid und Wasserstoff, aus kohlenstoffhaltigen Energieträgern wie beispielsweise Erdgas, Leichtbenzin, Methanol, Biogas oder Biomasse sowie Wasser bzw. Kohlendioxid.

In industriellem Maßstab laufen diese Prozesse kontinuierlich ab und benötigen deshalb eine konstante Wärmeversorgung. Der Prozesswärmebedarf dieser Prozesse wird auf 500 bis 600 TWh geschätzt. Derzeit werden die genannten Hochtemperaturprozesse ausschließlich unter Verwendung von Energiequellen durchgeführt, die über oxidative Verfahren (autotherm und/oder allotherm) gespeist werden. Der Nachteil dieser oxidativen Verfahren, d.h. zum einen die Rohstoffabhängigkeit und die begrenzte Verfügbarkeit der Rohstoffe und zum anderen die mit den oxidativen Verfahren verbundenen CO2-Emission (die CO2-Emissionen in Deutschland betrugen im Jahre 2010 rd. 960 Mio. t CO2-Äquivalent, wobei die Chemieindustrie mit ca. 5 % beiträgt), sind hinreichend bekannt.

Obwohl bei Hochtemperaturprozessen die Aufwendungen für das Erreichen der hohen Temperaturen einen entscheidenden Faktor für deren Wirtschaftlichkeit bilden, findet sich im Stand der Technik kein Hinweis auf eine Verwendung des kostengünstigen Überschussstroms, insbesondere einer Kombination aus einer elektrischen und einer nicht-elektrischen Energiequelle. Ferner findet sich kein Hinweis, dass bei einem Hochtemperaturprozess während des Verfahrens zwischen einer elektrischen und einer nicht-elektrischen Energiequelle gewechselt werden kann.

Aufgabe der vorliegenden Erfindung ist es daher, ein Verfahren aufzuzeigen, mit dem es möglich ist, elektrischen Strom, der nur mit zeitlich schwankender Leistung zur Verfügung steht, effektiv, d.h. mit einem hohen Wirkungsgrad, als Energiequelle zu nutzen. Eine weitere Aufgabe der vorliegenden Erfindung ist es, chemische Prozesse als Energieabnehmer bei einer negativen Minutenreserve zur Frequenzregelung in elektrischen Netzen bereitzustellen. Eine weitere Aufgabe der vorliegenden Erfindung ist es, chemische Hochtemperaturverfahren bereitzustellen, die einen geringen CO2-Footprint aufweisen und somit fossile Brennstoffe, bzw. CO2-Zertifikate, eingespart werden können.

Diese gestellten Aufgaben werden erfindungsgemäß durch ein Verfahren gemäß Anspruch 1 gelöst.

Die für den wärmeverbrauchenden Prozess insgesamt zur Verfügung stehende Leistung kann dabei vorteilhaft von dem, durch den wärmeverbrauchenden Prozess gegebenen, Sollwert um weniger als 10%, bevorzugt weniger als 5% und besonders bevorzugt weniger als 3% abweichen. Bevorzugt weicht die zur Verfügung stehende Leistung um 0 bis 5 % vom Sollwert ab, insbesondere um 0 bis 3 %.

Sowohl der Sollwert als auch die zulässige Abweichung können zeitlich verändert - falls beispielsweise der wärmeverbrauchende Prozess nur in Teillast oder zeitweise auch in Überlast durchgeführt werden soll - oder konstant gehalten werden. Vorzugsweise wird die Nennleistung, mit der die für die Durchführung des wärmeverbrauchenden Prozesses eingesetzte Vorrichtung betreibbar ist, als Sollwert gewählt und während des Normalbetriebs der Vorrichtung konstant gehalten.

Vorzugsweise wird die wenigstens eine nicht-elektrische Energiequelle durch oxidative Prozesse wie beispielsweise die Verbrennung von Erdgas gespeist. Denkbar ist jedoch auch der Einsatz von Erdwärme oder Sonnenenergie zur Speisung der Energiequelle. Ferner können Hochtemperaturprozesse als nicht-elektrische Energiequelle dienen, deren Abwärme dem wärmeverbrauchenden Prozess zugeführt wird.

Die Erfindung erlaubt es daher, den wärmeverbrauchenden Prozess unabhängig von der momentan zur Verfügung stehenden elektrischen Leistung, vorteilhaft als Überschussstrom, stets unter optimalen Betriebsbedingungen durchzuführen. Insbesondere ist es möglich, Überschussstrom ohne Zwischenspeicherung, d.h. annährend verlustfrei, mit einem Wirkungsgrad von vorteilhaft größer als 90 %, bevorzugt größer als 95 %, insbesondere größer als 98 %, d.h. in einem Bereich von vorteilhaft 95 bis 100 %, bevorzugt 98 bis 100 %, für den wärmeverbrauchenden Prozess einzusetzen und so seine Kostenvorteile ohne wesentliche Einschränkungen zu nutzen. Folglich kann Energie mit schwankender Leistung aus erneuerbaren Energiequellen direkt, d.h. ohne vorherige Glättung/Kompensation in einem Kraftwerk, in chemischen Prozessen eingesetzt werden.

Überschussstrom ist als solcher Strom definiert, der auf dem Strommarkt deutlich unterhalb seiner Gestehungskosten oder zu Preisen, die bezogen auf seinen Energiegehalt niedriger sind als für einen fossilen Brennstoff mit demselben Brennwert, oder umsonst (d.h. ohne Gegenleistung) oder sogar zu negativen Preisen angeboten wird.

Erfindungsgemäß handelt es sich bei dem wärmeverbrauchenden Prozess vorteilhaft um einen endothermen Hochtemperaturprozess, bevorzugt um einen Prozess, dessen Energieverbrauch in der Reaktionszone größer als 0,5 MW/m³ ist, besonders bevorzugt größer 1 MW/m³, insbesondere größer als 2 MW/m³. Beispielsweise kann der Energieverbrauch zwischen 0,5 und 10 MW/m³ in der Reaktionszone liegen.

Unter dem Begriff Reaktionszone wird bei der vorliegenden Erfindung derjenige Bereich im Reaktor verstanden, in welchem die Endothermie, d.h. der Wärmebedarf der Reaktion, vorteilhaft 10 kW/m³, bevorzugt 100 kW/m³, insbesondere 500 kW/m³ übersteigt. Dies entspricht in etwa dem Bereich im Reaktor, der eine Temperatur von größer 500°C aufweist.

Die Maximaltemperatur in der Reaktionszone liegt vorteilhaft bei größer 500°C, bevorzugt bei größer 800°C. Beispielsweise liegt die Temperatur in der Reaktionszone in einem Bereich von 500 bis 2500°C, bevorzugt 700 bis 1800°C; beispielsweise bei 500 bis 800°C bei Dehydrierungs-Reaktionen, beispielsweise bei 700 bis 1000°C bei Reformierungs-Reaktionen, beispielsweise bei 800 bis 1100°C bei Dampf-Spaltungs-Reaktionen, beispielsweise bei 800 bis 1500°C bei Pyrolyse-Reaktionen, beispielsweise bei 800 bis 1200°C bei Kohlenstoff-Vergasungs-Reaktionen.

Beispiele für den Energiebedarf endothermer Hochtemperaturprozesse finden sich in Tabelle 1.

| Produkt | Temperaturniveau Wärmeeintrag [°C] | Kapazität GER [Mio tn / a] | Wärmebedarf [GWh/a] | CO₂-Äquivalent [Mio tn/a] |
|---|---|---|---|---|
| Wasserstoff | 900 | 0,535 | 5572,9 | 2,25 |
| Propen | 1050 | 3,9 | 3224,2 | 1,30 |
| Styrol | 720 | 1,3 | 420,1 | 0,17 |

Der Exergieverlust bei der Durchführung des erfindungsgemäßen Verfahrens liegt vorzugsweise bei weniger als 60%, bevorzugt bei weniger als 50%, besonders bevorzugt bei weniger als 40%, insbesondere bei weniger als 25 % der eingetragenen elektrischen Energie. Exergie ist der Anteil der inneren Energie eines Systems, der in mechanische Energie ohne Entropiezunahme umsetzbar ist. Elektrische Energie ist praktisch vollständig eine Exergie.

Mit besonderem Vorzug wird das erfindungsgemäße Verfahren bei der Herstellung von Synthesegas, von Wasserstoff, von Styrol, Propen, Buten und/oder Benzol, von Acetylen, von Kohlenstoffmonoxid, von Blausäure, von Stickstoffmonoxid sowie bei der Kalzinierung von Aluminiumhydroxid eingesetzt. Bevorzugt sind folgende Verfahren: Dampf- und Trockenreformierung, die Thermolyse von Wasser, die Dehydrierung Ethylbenzol zu Styrol, von Propan zu Propen, von Butan zu Buten und/oder von Cyclohexan zu Benzol, die Pyrolyse und das Cracken von Kohlenwasserstoffen in Festbett oder Wirbelschichtverfahren, insbesondere die Pyrolyse von Methan, Ethan, Propan und/oder Butan, sowie die pyrolytische Acetylenherstellung, die Herstellung von Benzol aus Methan, die Reduktion von Kohlendioxid zu Kohlenmonoxid und die Herstellung von Blausäure aus Methan und Ammoniak sowie die Herstellung von Stickstoffmonoxid aus Stickstoff und Sauerstoff.

Vorteilhaft ist der erfindungsgemäße Hochtemperaturprozess energieintegriert in einen Verbundstandort eingebunden, aufgrund der Energieintegration kann der Wirkungsgrad der eingesetzten Wärme vorteilhaft um absolute 2 % erhöht werden, bevorzugt um absolute 3 %, ganz besonders bevorzugt um absolute 5 %, insbesondere um absolute 10%, im Vergleich zu einem separat betriebenen Hochtemperaturprozess.

Das erfindungsgemäße Verfahren wird vorteilhaft kontinuierlich oder quasi-kontinuierlich durchgeführt.

Vorzugsweise werden im Jahresmittel mindestens 50%, besonders bevorzugt mindestens 75%, noch bevorzugter mindestens 90% und insbesondere mindestens 95% der eingesetzten elektrischen Energie durch Überschussstrom und/oder Nachtstrom (wobei Nachtstrom als solche elektrische Energie definiert ist, die bei Nacht geliefert wird - beispielsweise zwischen 22 und 6 Uhr und einen Niedrigtarif aufweist), bevorzugt Überschussstrom, bereitgestellt. Vorzugsweise werden im Jahresmittel 50 bis 100%, besonders bevorzugt 75 bis 100%, noch bevorzugter 90 bis 100 % und insbesondere 95 bis 100% der eingesetzten elektrischen Energie durch Überschussstrom bereitgestellt. Besonders bevorzugt wird jedoch die gesamte über Elektrizität in das Verfahren eingebrachte Energie durch Überschussstrom und/oder Nachtstrom, bevorzugt Überschussstrom, bereitgestellt.

Bevorzugt werden im Jahresmittel mindestens 10% der für den wärmeverbrauchenden Prozess benötigten Gesamtenergie aus der elektrischen Energiequelle mit schwankender Leistung bezogen, besonders bevorzugt mindestens 15%, ganz besonders bevorzugt mindestens 20% und insbesondere um mindestens 25 %.

Vorteilhaft erfolgt ein Wechsel der Energiequellen/Energiemodi während der Durchführung des wärmeverbrauchenden Prozesses. Unter einem Wechsel der Energiequellen/Energiemodi ist ein Zu- bzw. Abschalten einer der Energiequellen, d.h. eine Änderung des Energiequellenmixes zwischen den Modi (i), (ii) und (iii) zu verstehen.

Der Wechsel der Energiequellen beeinträchtigt die Durchführung des wärmeverbrauchenden Prozesses vorteilhaft nur wenig.

Vorteilhaft verringert sich bzw. schwankt der dem Prozess zugeführte Wärmestrom während der Übergangszeit maximal um 10%, bevorzugt maximal um 5% und insbesondere maximal um 1%.

Die Übergangszeit ist erfindungsgemäß diejenige Zeit, in der der Wechsel der Energiequellen/Energiemodi (von einem Energiemodus in den anderen) vollständig vollzogen wird. Die Übergangszeit lässt sich beispielsweise anhand der Summe der Leistung aller Energiequellen messen oder anhand der Temperatur in der Reaktionszone; außerhalb der Übergangszeit (und ggf. außerhalb des An- oder Herunterfahrens des Prozesses) ist die Temperatur in der Reaktionszone bevorzugt konstant, z.B. bei einer kontinuierlichen Fahrweise des wärmeverbrauchenden Prozesses, oder weist z.B. bei einer periodischen Fahrweise des wärmeverbrauchenden Prozesses einen periodischen Temperaturverlauf auf.

Vorteilhaft ändert sich die Temperatur in der Reaktionszone während der Übergangszeit maximal um 20 K, bevorzugt maximal um 10 K, besonders bevorzugt maximal um 5 K, insbesondere maximal um 1 K. Typische chemische Hochtemperaturprozesse weisen eine Dynamik bei Temperaturänderungen von 1 K/s auf.

Vorteilhaft ändert sich der Umsatz des wärmeverbrauchenden Prozesses während der Übergangszeit maximal um 2 %, bevorzugt maximal um 1 %, besonders bevorzugt maximal um 0,5 %, insbesondere maximal um 0,2 %.

Die Übergangszeit ist vorteilhaft kürzer als die geforderte Ansprechzeit der Minutenreserve in elektrischen Netzwerken, bevorzugt kürzer als die geforderte Ansprechzeit der Sekundärregelung (< 7,5 Minuten) und besonders bevorzugt kürzer als die geforderte Ansprechzeit der Primärregelung (< 30 Sekunden).

Die Übergangszeit ist vorteilhaft kürzer als 15 Minuten, bevorzugt kürzer als 7,5 Minuten, besonders bevorzugt kürzer als fünf Minuten, ferner besonders bevorzugt kürzer als 60 Sekunden, insbesondere kürzer als 30 Sekunden. Die Übergangszeit liegt vorteilhaft im Bereich von 0 Sekunden bis 15 Minuten, bevorzugt 0,2 Sekunden bis 7,5 Minuten, besonders bevorzugt 0,5 Sekunden bis 5 Minuten, ferner besonders bevorzugt 1 Sekunden bis 60 Sekunden, insbesondere 1 Sekunde bis 30 Sekunden.

Beispielsweise kann die Leistung von üblicherweise verwendeten Brennern aus dem Stand der Technik innerhalb weniger Sekunden in einem weiten Bereich von ggf. "aus" bis zum Erreichen einer Temperatur von beispielsweise 2000°C verändert werden (siehe z.B. Produktspektrum von Selas-Linde).

Vorteilhaft ändert sich durch den Wechsel der Energiemodi die Nebenproduktselektivität der Hochtemperaturprozesse nur wenig, bevorzugt erhöht sich die Nebenproduktselektivität um maximal 1 %, bevorzugt um maximal 0,5 %, insbesondere um maximal 0,2 % (absolut).

Vorteilhaft ist das Temperaturprofil im Reaktor, insbesondere in der Reaktionszone, unabhängig von den drei genannten Energiemodi konstant. Bevorzugt ändert sich die Wärmestromdichte bei einem Wechsel der Energiemodi um weniger als 10 %, bevorzugt weniger als 5 %, insbesondere weniger als 2 %.

Vorteilhaft ist die Eduktzusammensetzung unabhängig von den drei genannten Energiemodi konstant. Bevorzugt ändert sich der Volumenstrom der Edukte bei einem Wechsel der Energiemodi um weniger als 20 %, bevorzugt weniger als 10 %, besonders bevorzugt weniger als 5 %, insbesondere weniger als 2 %.

Um thermische Energie für den wärmeverbrauchenden Prozess über elektrischen Strom bereitzustellen, können unterschiedliche Wege beschritten werden. Beispielhaft sind hier induktive oder resistive Verfahren, Plasmaverfahren, ein Erwärmen durch elektrisch leitfähige Heizelemente/Kontaktflächen oder durch Mikrowellen zu nennen.

Die thermische Energiezufuhr in die Prozessströme kann beispielsweise außerhalb des Reaktors, in Abschnitten in welchen wärmeverbrauchende Prozessschritte durchgeführt werden, beispielsweise Feed-Vorwärmung, und/oder innerhalb der Reaktors, sowohl außer- als auch innerhalb der Reaktionszone erfolgen.

Beispielsweise kann mit Hilfe des Stroms Wärme in einem oder mehreren elektrisch leitfähigen Heizelementen erzeugt werden, mit denen ein zu behandelnder Prozessstrom, d.h. ein Wärmeträger (wobei der Wärmeträger auch ein Teil des Produktstroms sein kann) oder Eduktstrom, in direkten Kontakt gebracht und dabei aufgeheizt wird. Falls ein Wärmeträger oder Eduktstrom in direktem Kontakt mit einem strombeheizten Heizelement aufgeheizt wird, kann dieser anschließend Wärme in direktem Kontakt und/oder über einen Wärmetauscher auf einen anderen Prozessstrom übertragen.

Vorteilhaft ist der Wärmeträger vollständig von den Produkten und Edukten abtrennbar. Vorteilhaft handelt es sich bei dem Wärmeträger um keinen zusätzlichen Stoff im Vergleich zu den aus dem Stand der Technik bekannten Prozessströmen des jeweiligen wärmeverbrauchenden Prozesses. Bevorzugt sind solche Prozessströme, die Kohlenwasserstoffe, insbesondere Methan, Ethan, Propan, Butan, Cyclohexan und/oder Ethylbenzol, Wasser, Wasserstoff, Kohlendioxid, Kohlenmonooxid, Ammoniak und/oder Sauerstoff und/oder Inertgase, wie beispielsweise Stickstoff, enthalten. Besonders bevorzugt sind solche Prozessströme, die Methan, Ethylen und/oder Wasserstoff enthalten. Insbesondere ist Wasserstoff als Prozessstrom bevorzugt.

Zur Wärmeerzeugung kann der elektrische Strom vorteilhaft durch ein als Heizleiter ausgeführtes Heizelement geführt werden, wobei Wärme resistiv erzeugt wird. Handelt es sich bei dem elektrischen Strom um Wechselstrom, kann vorteilhaft mit seiner Hilfe ein magnetisches Wechselfeld erzeugt werden, wozu der Strom durch eine Induktionsspule geführt wird. Ein elektrisch leitfähiges Heizelement, das von der Induktionsspule elektrisch isoliert ist, wird vorteilhaft so angeordnet, dass in ihm durch das magnetische Wechselfeld Wirbelströme induziert werden, die aufgrund der ohmschen Verluste zur Erwärmung des Heizelements führen.

Eine alternative Ausgestaltung der Erfindung sieht vor, dass der elektrische Strom verwendet wird, um zumindest einen Teil der gasförmigen Prozessströme durch teilweise Ionisierung in ein Plasma zu überführen. Die bei der Rekombination von Elektronen und Ionen freigesetzte Energie wird zu einem Großteil auf die Gas-Atome bzw. -Moleküle übertragen, so dass ein aufgeheizter Prozessstrom erzeugt wird, der entweder selbst bereits ein aufgeheizter Eduktstrom ist und/oder als Wärmeträger fungiert, dessen Wärme anschließend in direktem Kontakt und/oder über einen Wärmetauscher auf einen Eduktstrom des wärmeverbrauchenden Prozesses, z. B. auf zu zersetzende Kohlenwasserstoffe, übertragen wird. Zweckmäßigerweise wird zumindest einen Teil der gasförmigen Prozessströme hierbei durch einen Plasmagenerator geführt, in den ein kalter Gasstrom eingeleitet und aus dem ein aufgeheizter Gasstrom abgezogen wird. Die Größe der Teilmenge, die durch den Plasmagenerator geführt wird, bestimmt sich durch die Menge der zu übertragenden Wärme.

Bei der Durchführung des erfindungsgemäßen Verfahrens im Energiemodus (ii) wird die mit zeitlich schwankender Leistung aus der elektrischen Energiequelle bezogene thermische Energie beispielsweise dazu verwendet, um einen aufgeheizten Prozessstrom, ggf. einen Wärmeträger, mit konstantem Mengenstrom zu erzeugen, dessen Temperatur in Abhängigkeit von der für die Aufheizung momentan zur Verfügung stehenden elektrischen Leitung zeitlich schwankt. Alternativ kann auch der Mengenstrom des Prozessstroms, ggf. des Wärmeträgers, so geregelt werden, dass die Temperatur des Prozessstroms, ggf. des Wärmeträgers, - zumindest in einem weiten Bereich - unabhängig ist von der elektrischen Leistung, die zu seiner Aufheizung bereitsteht.

Vorzugsweise wird bei der Durchführung des erfindungsgemäßen Verfahrens einem Prozessstrom in einem ersten Aufheizschritt thermische Energie aus der elektrischen Energiequelle zugeführt. Falls die momentane Leistung der elektrischen Energiequelle nicht ausreicht, wird weiter stromabwärts in wenigstens einem zweiten Aufheizschritt die Temperatur des Prozessstroms durch die Zuführung von thermischer Energie aus wenigstens einer nicht-elektrischen Energiequelle auf den gewünschten Wert angehoben. Die Aufheizung des Prozessstroms kann auch in umgekehrter Reihenfolge stattfinden, d.h. der Prozessstrom wird erst durch thermische Energie aus wenigstens einer nicht-elektrischen Energiequelle vorgeheizt und anschließend durch elektrisch erzeugte Wärme auf die gewünschte Temperatur gebracht.

Alternativ zur Schaltung in Reihe der beiden oder mehreren Energiequellen können diese Energiequellen auch parallel geschaltet sein, wobei zwei oder mehr Prozessströmen parallel thermische Energie zugeführt wird.

Wenn ein Plasmagenerator als elektrische Energiequelle in Kombination mit oxidativen Verfahren genutzt wird, ist die Kontamination des Plasmabrenners durch Rauchgase zu vermeiden. Vorteilhaft werden daher die Prozessströme erst durch den Plasmagenerator (vor)geheizt und anschließend durch oxidative Verfahren auf die gewünschte Temperatur gebracht. Alternativ werden der Plasmagenerator und das oxidative Verfahren parallel gefahren.

Wird bei der Durchführung des erfindungsgemäßen Verfahrens eine nicht-elektrische Energiequelle eingesetzt, in der thermische Energie oxidativ erzeugt wird, erfolgt dies bevorzugt durch vollständige oder teilweise Verbrennung eines Brennstoffs wie Wasserstoff, Erdgas, Kohle oder eines anderen kohlenwasserstoffhaltigen Energieträgers. Die Wärme des hierbei entstehenden heißen Rauchgases wird nachfolgend in direktem Kontakt und/oder über Wärmetauscher auf Edukte, wie beispielsweise auf zu zersetzende Kohlenwasserstoffe, und/oder auf einen Wärmeträger übertragen.

Alternativ wird ein oxidierbare Bestandteile wie z.B. Wasserstoff oder Kohlenwasserstoffe enthaltendes Gas, bevorzugt Methan, z.B. unter Verwendung von Erdgas, wobei in Abhängigkeit von der Erdgaslagerstätte der Methananteil im Erdgas typischerweise zwischen 75 und 99mol% liegt, als Prozessstrom eingesetzt, so dass sein Wärmeinhalt vorzugsweise nach der elektrischen Aufheizung durch Oxidation von oxidierbaren Bestandteilen erhöht werden kann. Zweckmäßigerweise wird der Prozessstrom hierzu in einen Brenner eingeleitet und dort mit einem Oxidationsmittel, bei dem es sich um Luft oder um mit Sauerstoff angereicherte Luft oder um reinen Sauerstoff handelt, vermischt. Das Oxidationsmittel wird dabei mengengeregelt zudosiert, wobei die sich stromabwärts des Brenners einstellende Temperatur des Prozessstroms als Regelgröße verwendet wird. Die Temperatur des Prozessstroms kann somit weitgehend unabhängig von der momentan für seine Erwärmung zur Verfügung stehenden elektrischen Leistung auf einen vorgegebenen Wert eingestellt und insbesondere konstant gehalten werden.

Falls mit Hilfe von Strom mit zeitlich schwankender Leistung Wärme in Heizelementen erzeugt wird, kann es vorteilhaft sein, diese Heizelemente in einem heißen gasförmigen Prozessstrom zu positionieren, der in einem Brenner als Rauchgas erzeugt wird.
Handelt es sich bei dem wärmeverbrauchenden Prozess um die Pyrolyse von Kohlenwasserstoffen, werden die Kohlenwasserstoffe vorteilhaft bis zum Erreichen des thermodynamischen Gleichgewichts über ihre Zersetzungstemperaturen erhitzt (d.h. dass die Verweilzeit in der Reaktionszone lang genug ist, um ein Erreichen des thermodynamischen Gleichgewichts sicherzustellen), so dass sie in Wasserstoff und Kohlenstoff zerfallen. Möglich ist es aber auch, die Zeit jenseits der Zersetzungstemperaturen so kurz zu wählen, dass sich das thermodynamische Gleichgewicht nicht einstellt. Auf diese Weise wird ein Produktgasstrom gewonnen, der neben Wasserstoff und Kohlenstoff auch ungesättigte Kohlenwasserstoffverbindungen und Aromaten, sowie nicht-umgesetzte gesättigte Kohlenwasserstoffe wie Methan und/oder Ethan enthält.

In einer alternativen Ausgestaltung der Erfindung werden Prozessströme vorteilhaft innerhalb der Reaktionszone aufgeheizt. Beispielsweise können Widerstandsstäbe und befeuerte Strahlungsrohre in der Reaktionszone angeordnet sein. Die Strahlungsrohre werden bevorzugt mit Rekuperativ- oder Regenerativbrennern kombiniert (J.A. Wünning, J.G. Wünning: Regeneratorbrenner für Strahlheizrohre. Deutscher Flammentag, Berlin, 2007). Vorteilhaft wird über eine Störgrößenaufschaltung die Brennstoffzufuhr zu den Brennern so geregelt, dass bei variierender Leistung der elektrischen Energiequelle der Sollwert der Temperatur in der Reaktionszone eingehalten werden kann. In dieser Konfiguration sind die Prozessströme von den Rauchgasen der oxidativen Verbrennung getrennt. Die Wärme wird indirekt über die Wand des Strahlungsrohrs übertragen. So wird durch die Kombination der elektrischen und der oxidativen Beheizung eine Kontamination der Prozessströme wirksam verhindert. Beispielsweise können die elektrisch beheizten und die oxidative beheizten Strahlungsrohe alternierend im Reaktionsraum angeordnet sein.

In einer unter dem Aktenzeichen DE102011106645.8 beim Deutschen Patent- und Markenamt eingereichten Patentanmeldung, deren Inhalt mit ihrer Zitierung zur Gänze in die vorliegende Anmeldung aufgenommen wird, wird ein Verfahren zur Zersetzung von Kohlenwasserstoffen beschrieben, bei dem die zu zersetzenden Kohlenwasserstoffe durch eine in einer Schüttung aus Granulat angeordnete Hochtemperaturzone geführt und dabei thermisch in Wasserstoff und Kohlenstoff zersetzt werden. Das Granulat ist vorteilhaft aus Partikeln gebildet, die Metall, Keramik, Kohle und/oder Koks enthalten, bevorzugt Kohle und/oder Koks mit einem Kohlenstoffgehalt im Bereich von 50 bis 100Gew.-%. Ausgestaltungen dieses Verfahrens sehen vor, dass für die Zersetzung benötigte Energie über elektrischen Strom und/oder oxidativ bereitgestellt wird. Da diese Art der Kohlenwasserstoffzersetzung besonders geeignet erscheint, um nach dem erfindungsgemäßen Verfahren durchgeführt zu werden, wird vorgeschlagen, Strom in Form von Überschussstrom zuzuführen und dessen zeitliche Leistungsschwankungen dadurch auszugleichen, dass thermische Energie mit zeitlich schwankender Leistung oxidativ erzeugt und für die Kohlenwasserstoffzersetzung derart bereitgestellt wird, dass die für die Zersetzung der Kohlenwasserstoffe insgesamt zur Verfügung stehende Leistung stets einem Sollwert entspricht oder diesem angenähert ist.

Die CO2-Emission liegt beim erfindungsgemäßen Verfahren für beispielsweise 100 kg Wasserstoff vorteilhaft bei weniger als 6,6 kg CO2/kgH2, bevorzugt bei weniger als 6,4 kg CO2/kgH2, insbesondere bei weniger als 6,2 kg CO2/kgH2.

Vorteilhaft reduziert sich die C02-Emission bei den erfindungsgemäßen Verfahren im Vergleich zu den analogen Verfahren aus dem Stand der Technik unter Verwendung von oxidativen Energiequellen um 10 bis 20%.

Das erfindungsgemäße Verfahren erlaubt es, Hochtemperaturverfahren als negative Minutenreserve bei Frequenzregelungen in elektrischen Netzen einzusetzen. Durch das erfindungsgemäße Verfahren sind diese Hochtemperaturverfahren schnell zuschaltbar und können ferner hohe Energiemengen von 500 bis 600 TWh abnehmen. Kontinuierlich betrieben sind diese Verfahren permanent für die Einspeisung von Überschussstrom, beispielsweise von Nachtstrom, verfügbar.

Hochtemperaturprozesse eignen sich besonders gut für die Nutzung elektrischer Energie, da die Umwandlung elektrischer Energie in Wärme dabei nur einen geringen Exergieverlust verursacht. Durch die Umwandlung in Wärme wird ein Teil der Exergie vernichtet. Dieser Anteil sinkt mit steigendem Temperaturniveau der Wärmesenke, im vorliegenden Fall eines endothermen Hochtemperaturprozesses. Da diese Prozesse weitgehend energieintegriert in Verbundstandorten eingebunden sind, kann aus der inneren Energie der Produktströme der maximale technisch mögliche Anteil wieder in Exergie, beispielsweise in Form von Hochdruckdampf, umgewandelt werden.

Die Erfindung erlaubt es somit, die Hochtemperaturprozesse, z.B. die Zersetzung von Kohlenwasserstoffen, unabhängig von der momentan zur Verfügung stehenden elektrischen Energie stets unter optimalen Betriebsbedingungen durchzuführen. Insbesondere ist es möglich, günstigen Überschussstrom ohne Zwischenspeicherung oder vorheriger Glättung/Kompensation in einem Kraftwerk einzusetzen und so dessen Kostenvorteile ohne wesentliche Einschränkungen zu nutzen. Ferner erlaubt die Erfindung trotz Wechsel zwischen zwei oder mehreren verschiedenen Energiequellen einen kontinuierlichen Betrieb, bei dem zum Beispiel die (Zersetzungs)produkte mit zeitlich konstanter Menge und Zusammensetzung erzeugt werden.

An zwei Beispielen sollen die wirtschaftlichen Vorteile gezeigt werden, die sich durch den Einsatz des erfindungsgemäßen Verfahrens ergeben:
Im Jahr 2010 konnten in Deutschland 127GWh elektrischer Energie aus erneuerbaren Quellen aufgrund von Überkapazitäten nicht produziert werden, ferner betrug die von den vier deutschen Netzbetreibern abgerufene negative Minutenreserve insgesamt ca. 850 GWh. Mit dieser Energie hätten ca. 100.000 t Wasserstoff durch Pyrolyse von Methan produziert werden können (bei einem Wirkungsgrad von ca. 66%). In einem konventionell beheizten Prozess wären für diese Energiemenge unter Annahme von spezifischen Energiekosten von 8 €/GJ ca. 25 Mio. € an Kosten angefallen.

Bei einer Anlage mit einer Wasserstoffproduktionsrate von 20.000 Nm³/h besteht für die thermische Zersetzung des eingesetzten Methans ein Leistungsbedarf von ca. 15 MW. Zurzeit steht an etwa 800 Stunden im Jahr Überschussstrom mit einer gesamten Energiemenge von ca. 12GWh im Wesentlichen kostenlos zur Verfügung. Soll die gleiche Energiemenge durch die Verbrennung von Methan erzeugt werden, würde dies unter der Annahme von 8 €/GJ Kosten in Höhe von ca. 350.000€ verursachen. Es ist zu erwarten, dass das Einsparungspotenzial durch zunehmende Verfügbarkeit von Überschussstrom zukünftig deutlich steigt.

Im Weiteren soll die Erfindung anhand eines in der Figur 1 schematisch dargestellten Ausführungsbeispiels näher erläutert werden.

Die Figur 1 zeigt eine Variante des erfindungsgemäßen Verfahrens, bei dem Methan in einer in einer Schüttung aus kohlenstoffhaltigem Granulat angeordneten Hochtemperaturzone in Wasserstoff und Kohlenstoff zersetzt wird.

Über die Zuführung 1 wird ein kohlenstoffhaltiges Granulat, bei dem es sich beispielsweise um Koksgrus handelt, mit Umgebungstemperatur, vorteilhaft 0 bis 300°C, bevorzugt 10 bis 150°C, insbesondere 50 bis 100°C, von oben in den Reaktionsraum R eingeleitet, durch den es nachfolgend unter Wirkung der Schwerkraft in einem Wanderbett W nach unten geführt wird. Ein Methan enthaltendes Gas 2, bei dem es sich beispielsweise um Erdgas handelt, wird gleichzeitig von unten in den Reaktionsraum R geleitet und im Gegenstrom durch das Wanderbett W nach oben geführt. Das Gas 2, das bei seinem Eintritt in den Reaktionsraum R Umgebungstemperatur, vorteilhaft 0 bis 100°C, bevorzugt 10 bis 50°C, aufweist, wird auf seinem Weg nach oben in direktem Wärmetausch mit dem Wanderbett W aufgeheizt. In der Hochtemperaturzone H, in der Temperaturen von mehr als 1000°C herrschen, wird Methan in Wasserstoff und Kohlenstoff zersetzt, wobei sich der Kohlenstoff zum überwiegenden Teil an die kohlenstoffhaltigen Körner des Wanderbetts W anlagert. Der gebildete heiße Wasserstoff strömt weiter nach oben, wobei er in direktem Wärmetausch mit dem Wanderbett W abgekühlt wird, so dass über Leitung 3 ein wasserstoffhaltiges Gas mit einer Temperatur abgezogen werden kann, die nicht wesentlich oberhalb der Umgebungstemperatur, vorteilhaft 50 bis 800°C, bevorzugt 100 bis 500°C, liegt. In der Trenneinrichtung T wird ein Teil 4 des Wasserstoffs aus dem wasserstoffhaltigen Gas 3 abgetrennt und nachfolgend mit konstantem Mengenstrom in eine Vorrichtung zum elektrischen Energieeintrag, z.B. einen Plasmagenerator P eingeleitet, wo es zu einem Wärmeträger 5 aufgeheizt wird. Der Plasmagenerator P wird mit Überschussstrom 9 betrieben, der mit zeitlich schwankender Leistung zugeführt wird. Abhängig von der momentanen Leistung des Überschussstroms 9 schwankt die Temperatur des Wärmeträgers 5 zwischen einem Minimal- und einem Maximalwert. Um die Temperatur des Wärmeträgers auf einem vorgegebenen Sollwert einzustellen, wird über den Brenner B ein Oxidationsmittel 10, bei dem es sich um Sauerstoff, Luft oder mit Sauerstoff angereicherte Luft handelt, mengengeregelt dem Wärmeträger 5 zudosiert. Als Regelgröße dient hierbei die Temperatur des Wärmeträgers 11 stromabwärts des Brenners B. Der Wärmeträger 11 wird nachfolgend in die Hochtemperaturzone H eingeleitet, wo er die für die Methanzersetzung benötigte Energie bereitstellt. Am unteren Ende des Reaktionsraums R wird mit nahezu Umgebungstemperatur, vorteilhaft 10 bis 400 °C, bevorzugt 20 bis 200°C, Granulat 6 abgezogen, das aufgrund der Kohlenstoffanlagerungen beispielsweise als Hochofenkoks oder Kokereizuschlagsstoff eingesetzt werden kann. Bestandteile des Granulats 6, die die Qualitätsanforderungen nicht erfüllen, weil sie einen zu großen (<80 mm) oder zu kleinen Durchmesser (<35 mm) oder beispielsweise eine zu geringe Festigkeit (Trommelfestigkeit 140 für Hochofenkoks > 40% gemäß ISO/FDIS 18894:2003) aufweisen, werden in der Trenneinrichtung S durch Siebung und/oder Sichtung abgetrennt und nach einer eventuellen Zerkleinerung über Leitung 7 wieder in den Reaktionsraum R zurückgeführt. Bei dem verbleibenden Rest 8 handelt es sich um Hochofenkoks, der als hochwertiges Produkt abgegeben wird.

## Patentansprüche

1. Verfahren zur Durchführung eines wärmeverbrauchenden Prozesses, **dadurch gekennzeichnet, dass** die für den wärmeverbrauchenden Prozess benötigte Gesamtenergie im Jahresmittel aus mindestens zwei verschiedenen Energiequellen stammt, wobei eine der Energiequellen eine elektrische Energiequelle ist, deren Leistung zwischen 0 und 100% der benötigten Gesamtleistung variiert, und wobei der Überschussstrom, der als solcher Strom definiert ist, der auf dem Strommarkt deutlich unterhalb seiner Gestehungskosten oder zu Preisen, die bezogen auf seinen Energiegehalt niedriger sind als für einen fossilen Brennstoff mit demselben Brennwert, oder umsonst oder sogar zu negativen Preisen angeboten wird, ohne Zwischenspeicherung oder vorheriger Glättung/Kompensation in einem Kraftwerk in dem wärmeverbrauchenden Prozess eingesetzt wird, und drei unterschiedliche Energiemodi einzeln die gesamte benötigte Leistung für den wärmeverbrauchende Prozess zur Verfügung stellen können: (i) ausschließlich elektrische Energie, (ii) eine Mischung aus elektrischer Energie und mindestens einer weiteren nicht-elektrischen Energiequelle oder (iii) ausschließlich nicht-elektrische Energie, wobei ein Wechsel der Energiequellen/Energiemodi während der Durchführung des wärmeverbrauchenden Prozesses erfolgt und die Übergangszeit, in der der Wechsel von einem Energiemodus zu einem anderen Energiemodus vollzogen wird, maximal 30 Minuten beträgt, wobei die nicht-elektrische Energiequelle durch oxidative Prozesse gespeist wird und die mit zeitlich schwankender Leistung aus der elektrischen Energiequelle bezogene thermische Energie für den wärmeverbrauchenden Prozess mittels induktive oder resistive Verfahren, Plasmaverfahren, ein Erwärmen durch elektrisch leitfähige Heizelemente/Kontaktflächen oder durch Mikrowellen bereitgestellt wird, wobei die beiden oder mehreren Energiequellen in Reihe oder parallel geschaltet sind.

2. Verfahren nach Anspruch 1, **dadurch gekennzeichnet, dass** im Energiemodus (ii) einem Prozessstrom in einem ersten Aufheizschritt thermische Energie aus der elektrischen Energiequelle zugeführt wird und falls die momentane Leistung der elektrischen Energiequelle nicht ausreicht, wird weiter stromabwärts in wenigstens einem zweiten Aufheizschritt die Temperatur des Prozessstroms durch die Zuführung von thermischer Energie aus wenigstens einer nicht-elektrischen Energiequelle auf den gewünschten Wert angehoben.

3. Verfahren nach Anspruch 1, **dadurch gekennzeichnet, dass** im Energiemodus (ii) der Prozessstrom erst durch thermische Energie aus wenigstens einer nicht-elektrischen Energiequelle vorgeheizt und anschließend durch elektrisch erzeugte Wärme auf die gewünschte Temperatur gebracht wird.

4. Verfahren nach einem der Ansprüche 1 bis 3, **dadurch gekennzeichnet, dass** der Wirkungsgrad der elektrischen Energiequelle, deren Leistung zwischen 0 und 100% der benötigten Gesamtleistung variiert, größer als 90 % beträgt.

5. Verfahren nach einem der Ansprüche 1 bis 4, **dadurch gekennzeichnet, dass** mindestens 75 % der eingesetzten elektrischen Energie durch Überschussstrom und/oder Nachtstrom bereitgestellt wird.

6. Verfahren nach einem der Ansprüche 1 bis 5, **dadurch gekennzeichnet, dass** im Jahresmittel mindestens 10 % der für den wärmeverbrauchenden Prozess benötigten Gesamtenergie aus der elektrischen Energiequellen mit schwankender Leistung bezogen wird.

7. Verfahren nach einem der Ansprüche 1 oder 6, **dadurch gekennzeichnet, dass** mit Hilfe des elektrischen Stroms ein oder mehrere Prozessströme aufgeheizt werden, dessen Wärme nachfolgend für den wärmeverbrauchenden Prozess genutzt wird.

8. Verfahren nach einem der Ansprüche 1 bis 5, **dadurch gekennzeichnet, dass** während der Übergangszeit der dem wärmeverbrauchenden Prozess zugeführte Wärmestrom maximal um 10% schwankt.

9. Verfahren nach einem der Ansprüche 1 bis 8, **dadurch gekennzeichnet, dass** die Übergangszeit maximal 7,5 Minuten beträgt.

10. Verfahren nach einem der Ansprüche 1 bis 9, **dadurch gekennzeichnet, dass** der Energieverbrauch des Hochtemperaturprozesses größer als 0,5 MW/m³ in der Reaktionszone ist.

11. Verfahren nach einem der Ansprüche 1 bis 10, **dadurch gekennzeichnet, dass** sich durch den Wechsel der Energiequellen die Nebenproduktselektivität der Hochtemperaturprozesse maximal um 1 % erhöht.

12. Verfahren nach einem der Ansprüche 1 bis 11, **dadurch gekennzeichnet, dass** in wenigstens einer nicht-elektrischen Energiequelle thermische Energie oxidativ erzeugt wird.

13. Verfahren nach Anspruch 12, **dadurch gekennzeichnet, dass** in der Reaktionszone des Hochtemperaturprozesses elektrisch beheizte und oxidative beheizte Strahlungsrohe alternierend angeordnet sind.

14. Verfahren nach einem der Ansprüche 1 bis 13, **dadurch gekennzeichnet, dass** die Übergangszeit maximal 60 Sekunden beträgt.

15. Verfahren nach einem der Ansprüche 1 bis 13, **dadurch gekennzeichnet, dass** es sich bei dem wärmeverbrauchenden Prozess um die Dampf- und Trockenreformierung, die Thermolyse von Wasser, die Dehydrierung Ethylbenzol zu Styrol, von Propan zu Propen, von Butan zu Buten und/oder von Cyclohexan zu Benzol, die Pyrolyse und das Cracken von Kohlenwasserstoffen, die pyrolytische Acetylenherstellung, die Herstellung von Benzol aus Methan, die Reduktion von Kohlendioxid zu Kohlenmonoxid, die Herstellung von Blausäure aus Methan und Ammoniak und/oder die Herstellung von Stickstoffmonoxid aus Stickstoff und Sauerstoff handelt.

## Claims

1. A method for carrying out a heat-consuming process, wherein the total energy required averaged over a year for the heat-consuming process originates from at least two different energy sources, where one of the energy sources is an electric energy source whose power varies in the range from 0 to 100% of the total power required and where the excess power, which is defined as the power which is offered on the power market at significantly below its production costs or at prices which, based on its energy content, are lower than for a fossil fuel having the same calorific value or at no cost or even at negative prices, is used without intermediate storage or prior equalization/compensation in a power station in the heat-consuming process, and three different energy modes can individually provide the total power required for the heat-consuming process: (i) exclusively electric energy, (ii) a mixture of electric energy and at least one further nonelectric energy source or (iii) exclusively nonelectric energy, where a change of the energy sources/energy modes occurs while carrying out the heat-consuming process and the changeover time in which the change from one energy mode to another energy mode is completed is not more than 30 minutes, where the nonelectric energy source is supplied by oxidative processes and the thermal energy drawn with a power fluctuating over time from the electric energy source for the heat-consuming process is provided by means of inductive or resistive processes, plasma processes, heating by means of electrically conductive heating elements/contact areas or by means of microwaves, where the two or more energy sources are connected in series or in parallel.

2. The method according to claim 1, wherein, in the energy mode (ii), thermal energy from the electric energy source is supplied to a pressure stream in a first heating step and if the instantaneous power of the electric energy source is not sufficient, the temperature of the process stream is increased further downstream in at least one second heating step to the desired value by introduction of thermal energy from at least one nonelectric energy source.

3. The method according to claim 1, wherein, in the energy mode (ii), the process stream is firstly preheated by means of thermal energy from at least one nonelectric energy source and subsequently brought to the desired temperature by means of electrically generated heat.

4. The method according to any of claims 1 to 3, wherein the efficiency of the electric energy source whose power varies in the range from 0 to 100% of the total power required is greater than 90%.

5. The method according to any of claims 1 to 4, wherein at least 75% of the electric energy used is provided by excess power and/or nighttime power.

6. The method according to any of claims 1 to 5, wherein, averaged over a year, at least 10% of the total energy required for the heat-consuming process is drawn from the electric energy sources having a fluctuating power output.

7. The method according to either claim 1 or 6, wherein one or more process streams whose heat is subsequently utilized for the heat-consuming process are heated by means of the electric power.

8. The method according to any of claims 1 to 5, wherein the heat flow supplied to the heat-consuming process fluctuates by not more than 10% during the changeover time.

9. The method according to any of claims 1 to 8, wherein the changeover time is not more than 7.5 minutes.

10. The method according to any of claims 1 to 9, wherein the energy consumption of the high-temperature process is greater than 0.5 MW/m³ in the reaction zone.

11. The method according to any of claims 1 to 10, wherein the by-product selectivity of the high-temperature processes increases by a maximum of 1% during the change of the energy sources.

12. The method according to any of claims 1 to 11, wherein thermal energy is generated oxidatively in at least one nonelectric energy source.

13. The method according to claim 12, wherein electrically heated radiation tubes and oxidatively heated radiation tubes are arranged alternately in the reaction zone of the high-temperature process.

14. The method according to any of claims 1 to 13, wherein the changeover time is not more than 60 seconds.

15. The method according to any of claims 1 to 13, wherein the heat-consuming process is steam reforming and dry reforming, the thermolysis of water, the dehydrogenation of ethylbenzene to styrene, propane to propene, butane to butene and/or of cyclohexane to benzene, the pyrolysis and cracking of hydrocarbons, pyrolytic acetylene production, the production of benzene from methane, the reduction of carbon dioxide to carbon monoxide, the production of hydrocyanic acid from methane and ammonia and/or the production of nitrogen monoxide from nitrogen and oxygen.

## Revendications

1. Procédé de mise en œuvre d'un processus consommateur de chaleur, **caractérisé en ce que** l'énergie totale annuelle moyenne requise pour le processus consommateur de chaleur provient d'au moins deux sources d'énergie différentes, l'une des sources d'énergie est une source d'énergie électrique dont la puissance varie entre 0 et 100 % de la puissance totale requise, et le courant excédentaire, qui se définit comme un courant qui est proposé sur le marché de courant bien en deçà de ses coûts de production ou à des prix inférieurs en termes de contenu énergétique à des prix, pour un combustible fossile de même valeur calorifique, soit gratuits, soit même négatifs, sans stockage intermédiaire ou lissage/compensation préalable, étant utilisé dans une centrale électrique dans le processus consommateur de chaleur, et trois modes d'énergie différents pouvant fournir individuellement toute la puissance requise pour le processus consommateur de chaleur : (i) uniquement de l'énergie électrique, (ii) un mélange d'énergie électrique et d'au moins une autre source d'énergie non électrique ou (iii) de l'énergie exclusivement non électrique, un échange des sources d'énergie/modes d'énergie étant effectué au cours du processus consommateur de chaleur et le temps de transition pendant lequel l'échange d'un mode d'énergie pour un autre mode d'énergie est effectué étant au maximum de 30 minutes, la source d'énergie non électrique étant alimentée par des processus oxydatifs et l'énergie thermique tirée de la source d'énergie électrique avec une puissance qui fluctue dans le temps étant produite pour le processus consommateur de chaleur au moyen de procédés inductifs ou résistifs, de procédés au plasma, un chauffage par des éléments chauffants/surfaces de contact électriquement conducteurs ou par des micro-ondes, les au moins deux sources d'énergie étant montées en série ou en parallèle.

2. Procédé selon la revendication 1, **caractérisé en ce que** dans le mode d'énergie (ii) de l'énergie thermique provenant de la source d'énergie électrique est amenée dans une première étape de chauffage à un courant de processus et, dans le cas où la puissance instantanée de la source d'énergie électrique n'est pas suffisante, la température du courant de processus est élevée, plus en aval dans au moins une deuxième étape de chauffage, à la valeur souhaitée par apport d'énergie thermique provenant d'au moins une source d'énergie non électrique.

3. Procédé selon la revendication 1, **caractérisé en ce que** dans le mode d'énergie (ii) le courant de processus est d'abord préchauffé par l'énergie thermique provenant d'au moins une source d'énergie non électrique puis porté à la température souhaitée par la chaleur générée électriquement.

4. Procédé selon l'une des revendications 1 à 3, **caractérisé en ce que** le rendement de la source d'énergie électrique, dont la puissance varie entre 0 et 100 % de la puissance totale requise, est supérieur à 90 %.

5. Procédé selon l'une des revendications 1 à 4, **caractérisé en ce qu'**au moins 75 % de l'énergie électrique utilisée est produite par un courant excédentaire et/ou un courant de nuit.

6. Procédé selon l'une des revendications 1 à 5, **caractérisé en ce qu'**au moins 10 % de l'énergie totale annuelle moyenne requise pour le processus consommateur de chaleur est prélevée sur les sources d'énergie électrique à puissance fluctuante.

7. Procédé selon l'une des revendications 1 et 6, **caractérisé en ce qu'**un ou plusieurs courants de processus sont chauffés à l'aide du courant électrique dont la chaleur est ensuite utilisée pour le processus consommateur de chaleur.

8. Procédé selon l'une des revendications 1 à 5, **caractérisé en ce que** le flux de chaleur amené au procédé consommateur de chaleur fluctue au maximum de 10 % pendant la période de transition.

9. Procédé selon l'une des revendications 1 à 8, **caractérisé en ce que** le temps de transition est au maximum de 7,5 minutes.

10. Procédé selon l'une des revendications 1 à 9, **caractérisé en ce que** la consommation d'énergie du processus à haute température est supérieure à 0,5 MW/m³ dans la zone de réaction.

11. Procédé selon l'une des revendications 1 à 10, **caractérisé en ce que** la sélectivité en sous-produit des processus à haute température augmente au maximum de 1 % par échange des sources d'énergie.

12. Procédé selon l'une des revendications 1 à 11, **caractérisé en ce que** l'énergie thermique est générée par oxydation dans au moins une source d'énergie non électrique.

13. Procédé selon la revendication 12, **caractérisé en ce que** des tubes de rayonnement chauffés électriquement et chauffés par oxydation sont disposés alternativement dans la zone de réaction du processus à haute température.

14. Procédé selon l'une des revendications 1 à 13, **caractérisé en ce que** le temps de transition est au maximum de 60 secondes.

15. Procédé selon l'une des revendications 1 à 13, **caractérisé en ce que** le processus consommateur de chaleur est le reformage à la vapeur et à sec, la thermolyse de l'eau, la déshydrogénation de l'éthylbenzène en styrène, du propane en propène, du butane en butène et/ou du cyclohexane en benzène, la pyrolyse et le craquage d'hydrocarbures, la production d'acétylène pyrolytique, la production de benzène à partir de méthane, la réduction du dioxyde de carbone en monoxyde de carbone, la production de cyanure d'hydrogène à partir de méthane et d'ammoniac et/ou la production de monoxyde d'azote à partir d'azote et d'oxygène.
